# EUROPEAN PATENT APPLICATION

(11) **EP 4 809 978 A1**
(43) Date of publication of application: **23.09.2026**
(21) Application number: 26162199.9
(22) Date of filing: 04.03.2026
(51) Int. Cl.: A61C 13/00

(54) **METHOD FOR PROCESSING TWO OR MORE DENTAL PROSTHESES FROM ONE BLOCK**

(30) Priority: 17.03.2025 KR 20250034207
(71) Applicant: Huvitz Co., Ltd., Anyang-si, Gyeonggi-do 14055 (KR)
(72) Inventor: SHIM, Young Gil, 14055 Anyang-si (KR); LEE, Hyun Chul, 14055 Anyang-si (KR); SEO, Eun Jin, 14055 Anyang-si (KR); LEE, Weon Joon, 14055 Anyang-si (KR)
(74) Representative: Henkel & Partner mbB

(57) **Abstract**

A method for processing two or more dental prostheses from one block using a dental milling apparatus is disclosed. The method for processing a dental prosthesis includes: a step of mounting a block (5) to a dental milling apparatus through a block holder (8) attached to the block (5); a nesting step of positioning shapes of two or more prostheses (6a, 6b) to be processed, a support (30) supporting the prostheses (6a, 6b), and fixing pins (7a, 7b) fixing the prostheses (6a, 6b) to the support (30) in the block (5), wherein the two or more prostheses (6a, 6b) are arranged side by side in an axial direction of the block holder (8), the support (30) is formed on a side surface of the block (5) along the axial direction of the block holder (8), and the fixing pins (7a, 7b) are formed to connect and fix the two or more prostheses (6a, 6b) and the support (30); a step of grinding a side surface of the block (5) from a side surface located opposite to the support (30) toward a side surface direction where the support (30) is located using a processing tool (12) of the dental milling apparatus, thereby forming the two or more prostheses (6a, 6b), the support (30), and the fixing pins (7a, 7b); and a step of cutting the fixing pins (7a, 7b) from a remaining block (5a) where the two or more prostheses (6a, 6b), the support (30), and the fixing pins (7a, 7b) are formed, thereby obtaining the two or more prostheses (6a, 6b).

## Description

### CROSS-REFERENCE TO RELATED APPLICATION

This application claims benefit of priority to Korean Patent Application No. 10-2025-0034207 filed on March 17, 2025, the entire contents of which are incorporated herein by reference.

### FIELD OF THE DISCLOSURE

The present invention relates to a method for processing a dental prosthesis, and more particularly, to a method for processing two or more dental prostheses from one block using a dental milling apparatus.

### BACKGROUND

Prosthesis treatment is a dental treatment that recovers dental function by removing a damaged portion of a tooth and mounting a dental prosthesis in the area where the damaged portion has been removed.

To manufacture a dental prosthesis, a 3D shape of the oral structure where the prosthesis will be located is obtained using a 3D shape scanner, and the shape of the necessary prosthesis is designed using CAD (Computer Aided Design) program. Thereafter, according to the obtained shape data of the prosthesis, a processing material made of ceramic or the like is processed into the shape of the prosthesis using a dental milling apparatus operated by Numerical Control (NC) and CAM (Computer Aided Manufacture) program.

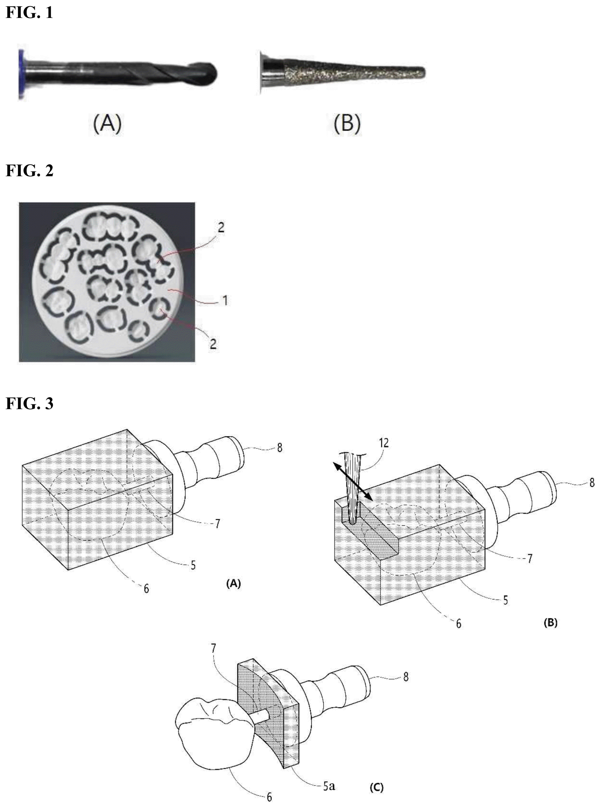

In a dental milling apparatus, methods for processing a processing material can be classified into two types: an end milling method and a grinding method. FIG. 1 is a photograph showing an example of a milling bur (A of FIG. 1), which is a processing tool used for end milling, and a grinding bur (B of FIG. 1), which is a processing tool used for grinding.

End milling processing is a method in which a blade of a milling bur digs into and cuts a processing material. It is advantageous for making holes or creating intricate shapes, but it can only be used for processing materials that can be cut by the blade of the milling bur. Among dental processing materials, zirconia, polymethylmethacrylate (PMMA), and hybrid ceramics, which have low hardness, are processed by the end milling method. If glass ceramic or the like having high hardness is processed by the end milling method, not only is the tip of the milling bur easily damaged, but processing is possible only with small steps, resulting in a disadvantage of a long processing time. End milling processing may be performed as dry processing in which water is not used or wet processing in which water is used, depending on the processing material.

The grinding method is a method of grinding a friction surface of a processing material by rubbing the side of a grinding bur rotating at high speed, for example, a diamond electrodeposited tool, against the processing material. It is used for processing hard materials that cannot be cut with a blade or cutter, such as ceramics and glass. Among dental processing materials, glass ceramic, lithium disilicate ceramic, fully sintered zirconia, and the like are processed by the grinding method. Since the grinding method is a grinding process using friction, it is performed as wet processing.

Meanwhile, processing materials for processing dental prostheses can be generally classified into two types: a disk type and a block type.

FIG. 2 is a photograph showing a state in which a disk-type processing material is processed into the shape of prostheses. As shown in FIG. 2, in the case of the disk-type processing material, a plurality of prostheses 2 are processed in one disk-type material 1. Therefore, the disk-type processing material 1 is economical and has the advantage of short processing time because a plurality of prostheses 2 can be processed sequentially at once. In the case of the disk-type material 1, since it is processed while widening holes from the front and rear surfaces, it is mainly processed by the end milling method.

FIG. 3 is a view showing a block-type processing material, a process of processing it into a prosthesis, and a state of the processed prosthesis. As shown in FIG. 3, in the case of the block-type processing material, the shape of a prosthesis 6 is nested in a rectangular parallelepiped block 5 using CAM program (A of FIG. 3). This process is a process of setting a position where the prosthesis 6 is to be formed in the block 5. At this time, the block 5 is in a state of being mounted on a milling apparatus through a block holder 8. When the position where the prosthesis 6 is to be formed is set, a processing tool 12, for example, a grinding bur, is brought into line or surface contact from the outermost front surface of the block 5, and while reciprocating, the block 5 is ground into the shape of the prosthesis 6 using the side surface of the processing tool 12 (B of FIG. 3). Such a grinding process is performed at the upper part and the lower part of the block 5, respectively, to form a three-dimensional prosthesis 6. When the milling processing has been completed, a fixing pin 7 serving as a fixture is formed at the rear end of the prosthesis 6, and the milled prosthesis 6 and the remaining block 5a are connected by the fixing pin 7 (C of FIG. 3).

In the case of the block-type processing material, since rapid manufacturing of the prosthesis 6 is possible, it is suitably used for a chair-side milling machine. When the block-type processing material is used, there are advantages in that the milling apparatus can be miniaturized, and the life of the diamond electrodeposited tool is relatively long and can be used stably. On the other hand, due to the structure of the milling apparatus and the characteristics of the milling method, only one prosthesis 6 is obtained from one block 5, and the remaining block 5a remaining after the prosthesis 6 is processed is discarded. In order to obtain an additional prosthesis, a user must mount a new block on the milling apparatus along with a new CAM operation, which takes cost and time.

Specifically, when the block 5 is processed into the shape of the prosthesis 6, the block 5 and the prosthesis 6 being processed must be maintained in a state attached to the milling apparatus through the block holder 8. Therefore, as shown in A of FIG. 3, the prosthesis 6 is located at the front end or in the middle of the block 5, and a fixing pin 7 (also referred to as a sprue, pin, or gate) for attaching the prosthesis 6 being processed to the remaining block 5a must be located, that is, formed, at the rear end of the prosthesis 6. As shown in B of FIG. 3, the block 5 is sequentially ground from the front end, that is, the direction opposite to the block holder 8, to the rear end, that is, the direction of the block holder 8. That is, using the grinding bur 12, the entire outer periphery of the block 5 is ground so that only the shape of the prosthesis 6 remains. In this way, when the milling processing of the prosthesis 6 is completed, as shown in C of FIG. 3, the processed prosthesis 6 is in a state of being fixed to the remaining block 5a and the block holder 8 by the fixing pin 7. Thereafter, the user separates the block holder 8 from the milling apparatus and cuts the fixing pin 7 to obtain the processed prosthesis 6.

As such, in the case of the block-type processing material, since the fixing pin 7 for fixing the processed prosthesis 6 must be formed, only one prosthesis 6 is processed from one block 5. If two or more prostheses 6 are to be processed from one block 5, the second prosthesis must be processed while leaving the first prosthesis 6 and the fixing pin 7 processed previously. However, this is not possible to implement structurally due to interference between the first prosthesis 6 and the fixing pin 7.

### [Prior Art Document]

(Patent Document 1) Korean Patent No. 10-1854730

### SUMMARY OF THE DISCLOSURE

### TECHNICAL OBJECTS

An object of the present invention is to provide a method for processing two or more dental prostheses from one block using a dental milling apparatus.

Another object of the present invention is to provide a method capable of reducing prosthesis processing costs and processing time and optimizing a user's workflow by sequentially processing two or more dental prostheses from one block using a dental milling apparatus.

### TECHNICAL SOLUTION

In order to achieve the above object, the present invention provides a method for processing dental prostheses, comprising: a step of mounting a block to a dental milling apparatus through a block holder attached to the block; a nesting step of positioning shapes of two or more prostheses to be processed, a support supporting the prostheses, and fixing pins fixing the prostheses to the support in the block, wherein the two or more prostheses are arranged side by side in an axial direction of the block holder, the support is formed on a side surface of the block along the axial direction of the block holder, and the fixing pins are formed to connect and fix the two or more prostheses and the support; a step of grinding a side surface of the block from a side surface located opposite to the support toward a side surface direction where the support is located using a processing tool of the dental milling apparatus, thereby forming the two or more prostheses, the support, and the fixing pins; and a step of cutting the fixing pins from a remaining block where the two or more prostheses, the support, and the fixing pins are formed, thereby obtaining the two or more prostheses.

Preferably, the nesting process is performed by CAM program into which size and shape information of the block to be processed and the two or more prostheses are input.

Preferably, the processing tool is a grinding bur.

Preferably, the step of forming the two or more prostheses, the support, and the fixing pins comprises: a step in which an upper portion of a side surface where a first prosthesis is located is ground along an upper shape of the first prosthesis by the processing tool to form an upper portion of the first prosthesis; a step in which an upper portion of a side surface where a second prosthesis is located is ground along an upper shape of the second prosthesis to form an upper portion of the second prosthesis; a step in which a lower portion of the side surface where the first prosthesis is located is ground along a lower shape of the first prosthesis to form a lower portion of the first prosthesis; and a step in which a lower portion of the side surface where the second prosthesis is located is ground along a lower shape of the second prosthesis to form a lower portion of the second prosthesis.

Preferably, a thickness of the support formed in the block is determined according to a position of the block mounted on the dental milling apparatus.

Preferably, the nesting step comprises a step of sensing a position of the mounted block after mounting the block to the dental milling apparatus, and a step of setting positions where the prostheses, the support, and the fixing pins are to be formed inside the block based on the sensed position of the block.

### EFFECTS OF THE DISCLOSURE

According to the method of the present invention, by sequentially processing two or more dental prostheses from one block using a dental milling apparatus, prosthesis processing costs and processing time can be reduced, and a user's workflow can be optimized.

### BRIEF DESCRIPTION OF THE DRAWINGS

The above and other objects, features, and other advantages of the present invention will be more clearly understood from the following detailed description taken in conjunction with the accompanying drawings, in which:
FIG. 1 is a photograph showing an example of an end mill used in an end milling method and a grinding bur used in a grinding method;
FIG. 2 is a photograph showing a state in which a disk-type processing material is processed into the shape of prostheses;
FIG. 3 is a view showing a block-type processing material, a process of processing it into a prosthesis, and a state of the processed prosthesis;
FIG. 4 is a view showing the structure of a dental milling apparatus in which a method for processing dental prostheses according to the present invention can be performed;
FIGS. 5 to 7 are views for explaining a process in which two or more prostheses are processed from one block in the method for processing dental prostheses according to an embodiment of the present invention; and
FIG. 8 is a view showing a case where the center of a block holder and a block coincide and a case where they do not coincide in the method for processing dental prostheses according to an embodiment of the present invention.

### DETAILED DESCRIPTION OF THE PREFERRED EMBODIMENTS

Hereinafter, the present invention will be described in detail with reference to the accompanying drawings. In the accompanying drawings, components performing the same or similar functions as those in the related art are given the same reference numerals. In the description of the present invention, terms such as up, down, left, right, front, rear, horizontal, and vertical are used to indicate relative positional relationships of components.

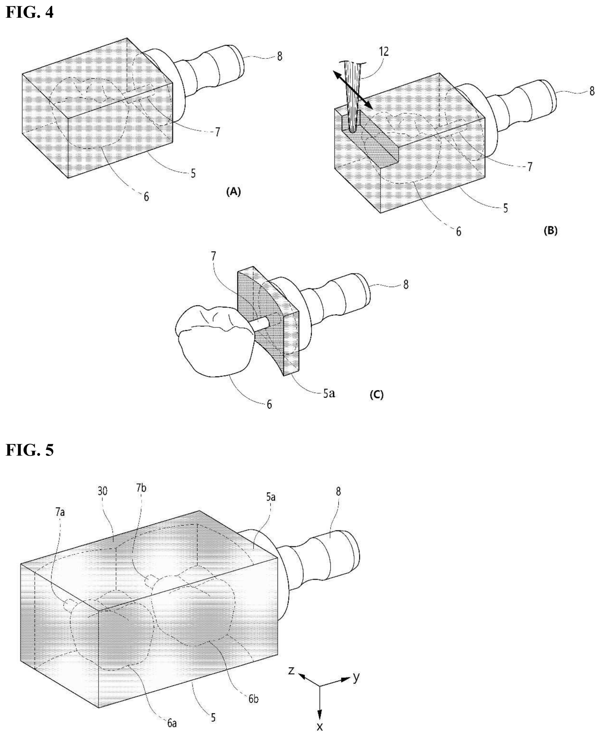

FIG. 4 is a view showing the structure of a dental milling apparatus in which a method for processing dental prostheses according to the present invention can be performed. As shown in FIG. 4, the dental milling apparatus in which the present invention can be performed includes a spindle 10 rotated by a motor (not shown), a processing tool 12 such as a milling bur or a grinding bur mounted on an axis end of the spindle 10 and rotating together with the spindle 10, a spindle base 14 on which the spindle 10 is mounted and which is driven in vertical (z-direction) and left-right (x-direction) directions, and a block mounting unit 18 on which a block 5 is mounted. The block 5 is mounted on the block mounting unit 18 through a block holder 8 to which the block 5 is fixed (see FIG. 3). The block mounting unit 18 is rotationally driven about an axis (y-axis) of the block holder 8 (see the arrow in FIG. 4) and also may be driven in a front-rear direction (y-direction).

According to shape data of dental prostheses to be processed, the spindle base 14 moves in vertical direction (z-direction) and in left-right direction (x-direction), and the block mounting unit 18 moves in front-rear direction (y-direction) and rotates along the y-axis. The spindle 10 and the processing tool 12 rotate at a high speed of, for example, 30,000 to 50,000 rpm by a motor, contact the block 5, and process the block 5 into the shape of prostheses.

FIGS. 5 to 7 are views for explaining a process in which two or more prostheses are processed from one block in the method for processing dental prostheses according to the present invention. To process dental prostheses according to the present invention, first, as shown in FIG. 4, the block 5 is mounted on the block mounting unit 18 of the dental milling apparatus through the block holder 8 attached to the block 5. Next, as shown in FIG. 5, shapes of two or more prostheses 6a and 6b to be processed, a support 30 supporting the prostheses 6a and 6b, and fixing pins 7a and 7b (sprue, pin) fixing the prostheses 6a and 6b to the support 30 are positioned, that is, nested, in the block 5. Here, the two or more prostheses 6a and 6b are arranged side by side in an axial direction (y-direction) of the block holder 8, the support 30 is formed on a side surface of the block 5 along the axial direction (y-direction) of the block holder 8, and the fixing pins 7a and 7b are formed to connect the two or more prostheses 6a and 6b and the support 30.

Such a nesting process is a process of setting positions where the prostheses 6a and 6b, the support 30, and the fixing pins 7a and 7b are to be formed inside the block 5, and may be performed by CAM program into which size and shape information of the block 5 to be processed and the two or more prostheses 6a and 6b are input. If necessary, the CAM program may provide a user with information on the block 5 having a size capable of processing the two or more prostheses 6a and 6b.

As described above, the block 5 is mounted on the milling apparatus through the block holder 8. The block 5 must have a size capable of processing, that is, forming, the two or more prostheses 6a and 6b, the support 30, and the fixing pins 7a and 7b, and preferably, as shown in FIG. 5, has a rectangular parallelepiped shape extending in the axial direction (y-direction) of the block holder 8. In the present invention, the number of prostheses 6a and 6b processed from one block 5 may be two or more, for example, two, three, or four.

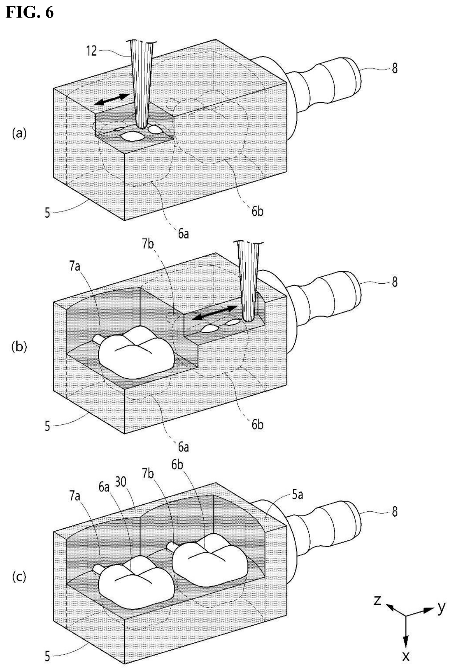

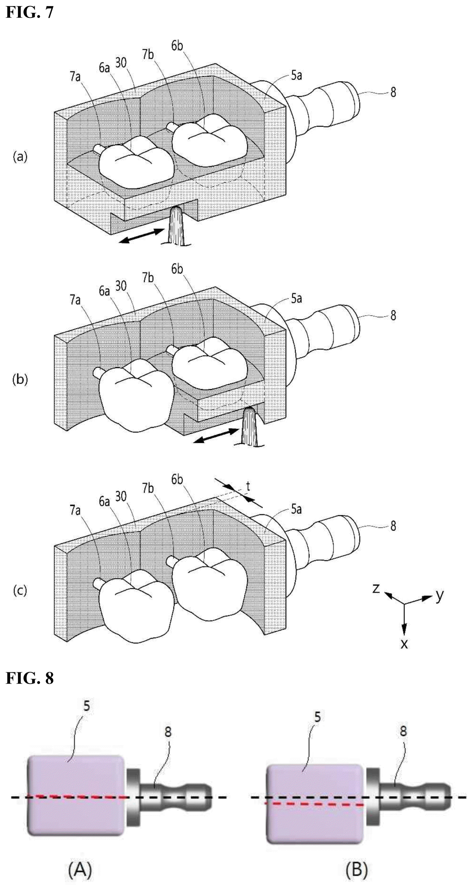

Next, as shown in FIGS. 6 and 7, using the processing tool 12 of the dental milling apparatus, preferably a grinding bur, specifically a diamond electrodeposited grinding bur, the side surface of the block 5 is ground from a side surface located opposite to the support 30 toward a side surface direction where the support 30 is located, thereby forming the two or more prostheses 6a and 6b, the support 30, and the fixing pins 7a and 7b. When the processing is completed, the support 30 formed on the side surface of the block 5 is supported by the remaining block portion, which remains after forming the prostheses 6a and 6b, the support 30, and the fixing pins 7a and 7b from the block 5, that is, the remaining block 5a, thereby to be in a state being fixed to the block holder 8.

A tool path, that is, a processing path, in which the processing tool 12 processes the block 5 to form the two or more prostheses 6a and 6b, the support 30, and the fixing pins 7a and 7b, may be appropriately set by the CAM program. For example, as shown in FIG. 6, an upper portion of the side surface where the first prosthesis 6a is located is ground along the upper shape of the first prosthesis 6a by the processing tool 12 to form an upper portion of the first prosthesis 6a (A of FIG. 6), and then an upper portion of the side surface where the second prosthesis 6b is located is ground along the upper shape of the second prosthesis 6b by the processing tool 12 to form an upper portion of the second prosthesis 6b (B of FIG. 6), thereby obtaining an intermediate product in which the upper portions of the first and second prostheses 6a and 6b are formed (C of FIG. 6). Next, as shown in FIG. 7, a lower portion of the side surface where the first prosthesis 6a is located is ground along the lower shape of the first prosthesis 6a by the processing tool 12 to form a lower portion of the first prosthesis 6a (A of FIG. 7), and then a lower portion of the side surface where the second prosthesis 6b is located is ground along the lower shape of the second prosthesis 6b by the processing tool 12 to form a lower portion of the second prosthesis 6b (B of FIG. 7), thereby obtaining a final product in which the first and second prostheses 6a and 6b are formed (C of FIG. 7).

Next, if necessary, the processed block 5 is separated from the dental milling apparatus, and the fixing pins 7a and 7b are cut from the support 30 and the remaining block 5a where the two or more prostheses 6a and 6b, the support 30, and the fixing pins 7a and 7b are formed to obtain the two or more prostheses 6a and 6b. At this time, portions of the fixing pins 7a and 7b remaining on the two or more prostheses 6a and 6b can be removed to obtain the two or more prostheses 6a and 6b in a complete form.

According to a further aspect of the present invention, a position, for example, a thickness, of the support 30 formed in the block 5 is determined according to the position of the block 5 mounted on the dental milling apparatus. Referring to C of FIG. 7, if the thickness t of the support 30 is too small, the support 30 may be damaged due to the processing load of the prostheses 6a and 6b. Therefore, when nesting the shapes of the prostheses 6a and 6b, the support 30, and the fixing pins 7a and 7b in the block 5 by the CAM program, it is necessary to set the support 30 to have an appropriate thickness "t".

Meanwhile, as shown in FIG. 8, it is preferable that the centers of the block holder 8 and the block 5 coincide (see A of FIG. 8), but there are cases where the centers of the block holder 8 and the block 5 do not coincide depending on the manufacturing state of the block holder 8 and the block 5, specifically, the bonding position the block 5 to the block holder 8 (see B of FIG. 8). As such, if the centers of the block holder 8 and the block 5 do not coincide, a case may occur where the thickness t of the support 30 nested by the CAM program becomes excessively small.

Therefore, according to a further aspect of the present invention, after mounting the block 5 to the dental milling apparatus, the position of the mounted block 5, specifically the side surface position, is sensed. And based on the sensed position of the block 5, a nesting process of setting positions where the prostheses 6a and 6b, the support 30, and the fixing pins 7a and 7b are to be formed inside the block 5 is performed so that the support 30 formed in the block 5 can have a sufficient thickness. The outer position (i.e., side surface position) of the block 5 mounted on the milling apparatus can be detected by sensing a contact position between the processing tool 12 and the block 5 while moving the processing tool 12, which is generally referred to as "position detection by tool touch".

According to the present invention, since two or more prostheses 6a and 6b are processed in one block 5, the time and cost required for processing the prostheses 6a and 6b can be reduced to 1/2 or less.

According to the present invention, the support 30 is formed on the side surface of the block 5, and the two or more prostheses 6a and 6b and the fixing pins 7a and 7b are arranged side by side with the support 30, that is, by arranging the fixing pins 7a and 7b on the side opposite to the processing progress direction of the processing tool 12, the prostheses 6a and 6b can be processed in a state where the prostheses 6a and 6b are fixed to the fixing pins 7a and 7b without requiring or forming a separate additional support.

In addition, according to the present invention, instead of sequentially grinding the block 5 from the front surface, that is, the direction opposite to the block holder 8, to the rear surface, that is, the direction of the block holder 8 (i.e., y-direction) (see FIG. 3), by sequentially grinding from one side surface of the block 5 to the other side surface (i.e., x-direction or z-direction, see FIGS. 6 and 7), it is possible to process the two or more prostheses 6a and 6b while minimizing interference between the processing tool 12 and the prostheses 6a and 6b, the fixing pins 7a and 7b, and the support 30.

Although the present invention has been described with reference to the accompanying drawings and exemplary embodiments, the present invention is not limited to the contents shown in the drawings and the above-described embodiments, and should be interpreted to cover all modifications, equivalent configurations, and functions of the exemplary embodiments within the scopes of appended claims. In addition, although reference numerals are indicated in the following claims to aid understanding, the scopes of the following claims is not limited to the reference numerals and the contents shown in the drawings.

## Claims

1. A method for processing dental prostheses, comprising:
a step of mounting a block (5) to a dental milling apparatus through a block holder (8) attached to the block (5);
a nesting step of positioning shapes of two or more prostheses (6a, 6b) to be processed, a support (30) supporting the prostheses (6a, 6b), and fixing pins (7a, 7b) fixing the prostheses (6a, 6b) to the support (30) in the block (5), wherein the two or more prostheses (6a, 6b) are arranged side by side in an axial direction of the block holder (8), the support (30) is formed on a side surface of the block (5) along the axial direction of the block holder (8), and the fixing pins (7a, 7b) are formed to connect and fix the two or more prostheses (6a, 6b) and the support (30);
a step of grinding a side surface of the block (5) from a side surface located opposite to the support (30) toward a side surface direction where the support (30) is located using a processing tool (12) of the dental milling apparatus, thereby forming the two or more prostheses (6a, 6b), the support (30), and the fixing pins (7a, 7b); and
a step of cutting the fixing pins (7a, 7b) from a remaining block (5a) where the two or more prostheses (6a, 6b), the support (30), and the fixing pins (7a, 7b) are formed, thereby obtaining the two or more prostheses (6a, 6b).

2. The method for processing dental prostheses according to claim 1, wherein the nesting process is performed by CAM program into which size and shape information of the block (5) to be processed and the two or more prostheses (6a, 6b) are input.

3. The method for processing dental prostheses according to claim 1, wherein the processing tool (12) is a grinding bur.

4. The method for processing dental prostheses according to claim 1, wherein the step of forming the two or more prostheses (6a, 6b), the support (30), and the fixing pins (7a, 7b) comprises:
a step in which an upper portion of a side surface where a first prosthesis (6a) is located is ground along an upper shape of the first prosthesis (6a) by the processing tool (12) to form an upper portion of the first prosthesis (6a);
a step in which an upper portion of a side surface where a second prosthesis (6b) is located is ground along an upper shape of the second prosthesis (6b) to form an upper portion of the second prosthesis (6b);
a step in which a lower portion of the side surface where the first prosthesis (6a) is located is ground along a lower shape of the first prosthesis (6a) to form a lower portion of the first prosthesis (6a); and
a step in which a lower portion of the side surface where the second prosthesis (6b) is located is ground along a lower shape of the second prosthesis (6b) to form a lower portion of the second prosthesis (6b).

5. The method for processing dental prostheses according to claim 1, wherein a thickness of the support (30) formed in the block (5) is determined according to a position of the block (5) mounted on the dental milling apparatus.

6. The method for processing a dental prostheses according to claim 5, wherein the nesting step comprises a step of sensing a position of the mounted block (5) after mounting the block (5) to the dental milling apparatus, and a step of setting positions where the prostheses (6a, 6b), the support (30), and the fixing pins (7a, 7b) are to be formed inside the block (5) based on the sensed position of the block (5).
